Europäisches Patentamt

European Patent Office

Office européen des brevets

(19)

(11) **EP 1 420 038 A2**

(12) **EUROPÄISCHE PATENTANMELDUNG**

(43) Veröffentlichungstag:
**19.05.2004  Patentblatt 2004/21**

(51) Int Cl.$^7$: **C08J 5/18**, B32B 27/00

(21) Anmeldenummer: **03023228.4**

(22) Anmeldetag: **14.10.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **26.10.2002  DE 10249907**

(71) Anmelder: **Mitsubishi Polyester Film GmbH**
**65203 Wiesbaden (DE)**

(72) Erfinder:
 • **Kiehne, Thorsten, Dr.**
  **65185 Wiesbaden (DE)**

 • **Peiffer, Herbert, Dr. Professor**
  **55126 Mainz (DE)**
 • **Kuhmann, Bodo**
  **65594 Runkel (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(54)  **Weisse, biaxial orientierte Polyesterfolie**

(57)     Weiße, biaxial orientierte Polyesterfolien, die eine Basisschicht B aufweisen, die einen thermoplastischen Polyester wie Polyethylenterephthalat enthält, und welche als Weißpigment im wesentlichen nur $TiO_2$ enthalten und dadurch gekennzeichnet sind, dass ihr R-Wert kleiner als 43 daN/mm$^2$, ihr $e_{max}$-Verhältnis kleiner als 2,5 und zumindest eine der beiden Folienoberflächen mit einer acrylathaltigen Beschichtung versehen ist, sind besonders reißfest und neigen nicht zum Delaminieren und sind daher insbesondere als Deckelfolien für Lebensmittelbehältnisse wie z. B. Joghurtbecher geeignet. Es wird ein Verfahren zur Herstellung der Folien beschrieben.

Printed by Jouve, 75001 PARIS (FR)

**Beschreibung**

Die Erfindung betrifft eine weiße, biaxial orientierte Polyesterfolie mit mindestens einer Basisschicht enthaltend einen thermoplastischen Polyester und mit mindestens einer acrylathaltigen Schicht, die bevorzugt als wässrige Dispersion auf die Folie aufgebracht wird. Die Erfindung betrifft weiterhin ein Verfahren zur Herstellung der Folie und ihre Verwendung.

Eine bekannte Anwendung von weiß eingefärbten, biaxial orientierten Polyesterfolien sind z. B. Deckel für Joghurtbecher. Sie werden dort alternativ zu Aluminiumfolien eingesetzt. Derartige Deckel werden auf der Außenseite bedruckt und geprägt und auf der Innenseite mit einem Lack oder Hotmelt versehen, mit dem die Deckel auf die Becher geklebt werden. Zur Verbesserung der Haltbarkeit des Joghurts müssen sowohl der Becher als auch der Deckel genügend Lichtschutz gewährleisten. Dies geschieht in der Regel durch Einfärben der Deckel mit geeigneten Pigmenten. Eine weitere Forderung an die Deckelfolie ist, dass sie beim Abziehen vom Becher weder delaminiert noch ein- und weiterreißt. Die dazu erforderlichen Eigenschaften erhält die Folie durch die biaxiale Streckung und durch eine entsprechend große Dicke. Die mechanischen Eigenschaften des Deckels (Steifigkeit, Durchstoßfestigkeit, Weiterreißfestigkeit) verbessern sich überproportional mit der Dicke der Folie. Für die Deckelanwendung bei Joghurt haben sich Polyesterfolien mit einer Dicke von 50 bis 90 µm bewährt. Die Dicke der Folie kann nicht beliebig groß sein, da mit der Dicke die Materialkosten anwachsen und die Siegeltaktzeiten zurückgehen, was aus wirtschaftlicher Sicht unerwünscht ist. Es ist ein Trend zu geringeren Dicken zu beobachten.

Deckel aus Polyesterfolien haben eine Reihe von Vorteilen:

Der Deckel hat eine glatte, hoch glänzende Oberfläche, die eine exzellente Farbwiedergabe garantiert und dadurch optisch sehr ansprechend wirkt.

Die Folie hat im Vergleich zu konventionellem Material eine bis zu 700 % höhere Durchstoßfestigkeit, was einen wesentlich höheren Produktschutz zur Folge hat.

Der Deckel ist leicht zu öffnen, ohne dass Fragmente des Deckels am Becher hängen bleiben, wie es bei konventionellen Materialien wie z. B. Aluminiumfolien beobachtet wird. Diese Eigenschaft wird insbesondere vom Verbraucher geschätzt.

Die vollständige Trennung von Becher und Deckel ist von großem Vorteil für die Rezyklierbarkeit der beiden Materialien. Die Deckelfolie besteht aus thermoplastischem Polyester, der exzellent rezyklierbar ist. Das Produkt ist damit umweltfreundlich. Weiterhin ist die Polyesterfolie für die Deckelanwendung infolge ihrer hohen Steifigkeit und ihrem guten Gleitvermögen (die Folie weist entsprechend dem Anforderungsprofil niedrige Reibkoeffizienten auf) hervorragend verarbeitbar.

Außerdem ist der Deckel absolut metallfrei. Dies garantiert eine sehr hohe Sicherheit bei der Metalldetektierung, die bei der Herstellung von Lebensmitteln immer häufiger angewendet wird. Mit der Methode kann damit der Anteil an den im Füllgut enthaltenen metallischen Bestandteilen mit hoher Genauigkeit bestimmt werden.

Verarbeiter verwenden bestimmte Kriterien für die Weiterverarbeitung der Folien zu Joghurtbechern. Die bei der Herstellung von Deckelfolien üblicher Weise verwendeten Prüfgrößen sind der R-Wert und das $e_{max}$-Verhältnis. Der R-Wert kann als ein Maß für die Orientierung angegeben werden und wird direkt nach Herstellung der Folie in Folienbahnmitte gemessen. Das $e_{max}$-Verhältnis beschreibt die Orientierungsverteilung über die Bahnbreite (der sogenannte "bow") und wird ebenfalls bei der Herstellung der Folie gemessen, allerdings in diskreten Abständen über die gesamte Breite der Folienbahn (vgl. unter Messmethoden). Bei transparenten Folien (nicht den hier vorliegenden weißen Folien) liegen die Werte für den R-Wert in einem Bereich von 42 bis 48 und für das $e_{max}$-Verhältnis in einem Bereich von 2,2 bis 2,8. Untersuchungen haben gezeigt, dass diese Werte nicht von transparenten Folien auf die vorliegenden weißen Folien übertragen werden können. Werden für weiße Folie obige angegebenen Werte eingehalten, so führt dies im allgemeinen zu einer Delaminierung der Folie. Die Folie delaminiert in sich, sie reißt in Dickenrichtung ein, der Riss zerstört die Folie und die Folie reißt weiter.

Die oben genannten Eigenschaften werden von den nach dem Stand der Technik bekannten Folien nicht in ihrer Gesamtheit erreicht. So beschreibt beispielsweise die EP-A-0 605 130 eine mehrschichtige Folie für die Deckelanwendung, die mindestens eine opake Schicht aus kristallinem Polyester und mindestens eine transparente Schicht aus kristallinem Polyester aufweist. Weiterhin wird die Folie durch einen Deformations-Index beschrieben, der ≥2,5 % sein soll. Daneben kann die Folie mit bestimmten Substanzen beschichtet werden, womit die Adhäsion zu Druckfarben und/oder Tinten verbessert wird. Als geeignete Substanzen werden bestimmte Acrylate aufgeführt. Über die R-Werte und das $e_{max}$-Verhältnis der Folie gibt die Schrift keine Auskunft. Eine nach der EP-A-0 605 130 (Beispiel 1, Längsstrecktemperatur ca. 80 °C, Streckverhältnis bei der Längsstreckung 3,3) nachgestellte Folie delaminierte, außerdem zeigte sie ein schlechtes Verarbeitungsverhalten, da sich die Folie nach dem Ausstanzen zu den Deckeln curlte.

Aus wirtschaftlicher Sicht ist es notwendig, die Kosten für die Herstellung der Deckelfolie permanent zu senken. Ein wesentlicher Hebel hierfür ist die Dicke der Folie. Eine geringere Dicke des Deckels geht direkt einher mit einer Senkung der Materialkosten und führt auf Grund niedriger Siegeltaktzeiten zu höheren Abfüllgeschwindigkeiten. Die Dicke des Deckels kann jedoch nicht beliebig verringert werden, da dies zu Verarbeitungs- und zu Handlingproblemen führt. Deckel aus Polyesterfolie mit zu geringer Dicke neigen zum Einreißen und zum Delaminieren. Eine Produktsicherheit und der Vorteil der 100%igen Trennung von Deckel und Becher ist dann nicht mehr gegeben. Die Gefahr des Einreißens und der Delaminierung des Deckels wird umso größer, je mehr Pigmente und um so größere Pigmente in die Polyesterfolie eingearbeitet werden. Pigmente, insbesondere gröbere, bilden in der Folie Schwachstellen, an denen die Zerstörung der Folie beim Abziehen vom Becher beginnt.

Des Weiteren ist es günstig, wenn die Folie eine Beschichtung erhält, die die Folie schlupffähiger macht, eine bessere Haftung zu Druckfarben, Klebern (z.B. Hotmelts) und Siegellacken ermöglicht, darüber hinaus aber die Folie nicht in ihren sonstigen Eigenschaften, z.B. in ihrer Optik, verändert. Dies ist ein wichtiger Punkt, vor allem für eine mögliche Verwendung von Eigenregenerat bei der Herstellung der Folie, das das Beschichtungsmaterial zwangsweise enthält.

Aufgabe der Erfindung war es daher, eine weiße, biaxial orientierte Polyesterfolie insbesondere für die Deckel-Anwendung bereitzustellen, die sich gegenüber den am Markt etablierten Polyesterfolien durch verbesserte Eigenschaften auszeichnet. Insbesondere sollte die neue Polyesterfolie durch folgende Eigenschaftskombination gekennzeichnet sein:

wirtschaftliche Herstellbarkeit, gute Wickelbarkeit, gute Verarbeitbarkeit;
gute Adhäsion mindestens einer Folienseite zu Farben, Klebern, Siegellacken;
sehr gutes Abziehverhalten vom Becher, keine Delaminierung, kein Ein- und Weiterreißen;
gute optische Eigenschaften, insbesondere auch bei Zugabe von Eigenregenerat bei der Folienherstellung, und
gute Lichtschutzeigenschaften.

Versuche, eine herkömmliche transparente Folie durch Pigmentzusatz mit der gewünschten Eigenschaftskombination auszustatten, scheiterten. Die Folie delaminierte beim Abziehen vom Joghurtbecher.

Gelöst wird die Aufgabe durch eine weiße, biaxial orientierte Polyesterfolie, die eine Basisschicht B aufweist, die einen thermoplastischen Polyester enthält, und dadurch gekennzeichnet ist, dass der R-Wert der Folie kleiner als 43 daN/mm$^2$, das $e_{max}$-Verhältnis der Folie kleiner als 2,5 und zumindest eine der beiden Folienoberflächen mit einer durchgehenden, vernetzten, acrylathaltigen Beschichtung versehen ist.

Bevorzugt enthält die Folie als Füllstoff oder Weißpigment im wesentlichen nur TiO$_2$, welches wiederum bevorzugt als Extrusionsmasterbatch dem Polymer zugesetzt wird.

Die Basisschicht B enthält den thermoplastischen Polyester bevorzugt zu mindestens 80 Gew.-%, bezogen auf das Gesamtgewicht dieser Schicht.

Die erfindungsgemäße acrylathaltige Beschichtung wird bevorzugt als wässrige Dispersion auf eine oder beide Folienoberflächen aufgebracht.

Es wurde gefunden, dass bei der bevorzugten Verwendung von im Wesentlichen TiO$_2$ als einfärbendem Pigment die Folie weniger anfällig gegenüber Einreißen und Delaminierung wird. Die Zugabe des TiO$_2$ bevorzugt über die Masterbatchtechnologie hat den Vorteil, dass Farbunterschiede z. B. durch nicht konstante Regenerateigenschaften relativ leicht korrigiert werden können. Bei Verwendung von TiO$_2$ als alleinigem Pigment wird die Folie besonders glatt und damit glänzender, neigt aber zum Verblocken. Die Wickeleigenschaften der Folie können schlechter werden.

Dieser Nachteil wird durch Beschichten zumindest einer der beiden Folienoberflächen mit einer durchgehenden vernetzten acrylathaltigen Schicht, die bevorzugt als wässrige Dispersion auf die Folie aufgebracht wird, wieder ausgeglichen. Überraschender Weise hat sich gezeigt, dass durch Verwendung dieser vernetzten, acrylathaltigen Beschichtung auf zumindest einer Folienoberfläche sowohl die Rollenaufmachung als auch die Verarbeitbarkeit der Folie deutlich verbessert werden kann, ohne dass dabei die hervorragenden optischen Eigenschaften der Folie verschlechtert werden. Weiterhin unerwartet hat sich gezeigt, dass die hervorragenden optischen Eigenschaften der Folie auch dann nicht vermindert werden, wenn das bei der Folienherstellung anfallende Regenerat (dieses kann Teilmengen der acrylischen Beschichtung enthalten) als Eigenregenerat in die Basisschicht der Folie eingearbeitet wird.

Der R-Wert der Folie wird direkt nach der Herstellung der Folie in der Mitte der Folienbahn bestimmt. Das $e_{max}$-Verhältnis wird ebenfalls direkt nach der Herstellung der Folie gemessen, jedoch in diskreten Abständen über die gesamte Breite der Folienbahn.

Erfindungsgemäß ist die Folie durch einen niedrigen R-Wert gekennzeichnet. Der R-Wert ist ein Maß für die Orientierung der Folie und ersetzt im Fall der vorliegenden Erfindung die sonst üblichen Orientierungsmaße Δn oder Δp. Diese können nur bei einer transparenten Folie gemessen werden, nicht aber bei der vorliegenden weißen Folie.

Der R-Wert der Folie wird in der Mitte der Folienbahn unter einem Winkel von 45 ° zur Maschinenrichtung (MD-Richtung) gemessen und zwar einmal rechts zur MD-Richtung und das andere Mal links zur MD-Richtung (siehe Messmethoden). Bei dieser Vorschrift wird berücksichtigt, dass bei Joghurtdeckeln die Folie üblicher Weise unter einem Winkel von 45° zur Maschinenrichtung vom Becher abgezogen wird.

Bei der Herstellung des Deckels (Bedrucken, Stanzen) wird von der Rolle gearbeitet. Die Rollenrichtung (= Bahnrichtung) der Folie entspricht dabei der MD-Richtung. Die Folienbahn wird dabei derart bedruckt, dass die auszustanzenden Deckel entweder exakt in MD-Richtung oder exakt in TD-Richtung liegen (TD = 90° zu MD). Daraus folgt, dass die Abziehrichtung des Deckels immer mit dem 45°-Winkel zur MD-Richtung zusammenfällt. Aus diesem Grunde ist es erforderlich, den R-Wert unter 45° zur MD-Richtung zu bestimmen.

Es wurde gefunden, dass das Aufreiß- und Weiterreißverhalten des Deckels umso günstiger bzw. geringer ist, je kleiner der R-Wert der Folie ist. Die Tendenz der Folie zum Delaminieren ist dann sehr gering. Der R-Wert der Folie nach der vorliegenden Erfindung beträgt bevorzugt weniger als 43 daN/mm$^2$, insbesondere weniger als 42 daN/mm$^2$ und besonders bevorzugt weniger als 40 daN/mm$^2$. Es wurde gefunden, dass im anderen Fall (R-Wert größer als 43 daN/mm$^2$) die Folie anfälliger gegenüber Einreißen und Delaminierung ist. Dieser Nachteil muss dann über eine beträchtlich größere Dicke der Folie wettgemacht werden.

Die Folie nach der vorliegenden Erfindung ist daneben durch ein niedriges $e_{max}$-Verhältnis gekennzeichnet. Das $e_{max}$-Verhältnis wird in definierten Abständen über die gesamte Bahnbreite der Maschinenrolle gemessen. Dies geschieht wiederum unter einem Winkel von 45° zur MD-Richtung und zwar einmal rechts zur MD-Richtung und das andere Mal links zur MD-Richtung (siehe Messmethode). In der Folienbahnmitte ist das $e_{max}$-Verhältnis nahezu eins und vergrößert sich in der Regel umso mehr, je näher man zu den Folienrändern gelangt. Das $e_{max}$-Verhältnis beschreibt die Eigenschaften der Folie über die Breite der Rolle, insbesondere die Änderung der Eigenschaften gegenüber der Mitte der Folienbahn. Die anwendungstechnischen Voraussetzungen sind umso besser, je geringer das $e_{max}$-Verhältnis ist, d.h. je gleichmäßiger die Folieneigenschaften über die Breite sind.

Das $e_{max}$-Verhältnis der erfindungsgemäßen Folie beträgt bevorzugt weniger als 2,5, insbesondere weniger als 2,2 und besonders bevorzugt weniger als 2,0. Im anderen Fall ($e_{max}$-Verhältnis ist größer als 2,5) ist die Folie anfälliger gegenüber Einreißen und Delaminierung. Dieser Nachteil muss dann über eine größere Dicke der Folie wettgemacht werden, was unwirtschaftlich ist.

Die erfindungsgemäße Folie ist in der Regel einschichtig aufgebaut und besteht dann aus der sog. Basisschicht B und der acrylathaltigen Beschichtung. Sie kann daneben aber auch mehrschichtig aufgebaut sein. Für diesen Fall hat es sich als günstig erwiesen, den Schichtaufbau der Folie symmetrisch zu gestalten. Vorteilhafte Ausführungsformen mehrschichtiger Folien sind beispielsweise ABA oder ACBCA, wobei unter A die äußeren Deckschichten, unter C die Zwischenschichten und unter B die Basisschicht verstanden wird.

Die Basisschicht B der Folie besteht zu mindestens 80 Gew.-%, bevorzugt zu mindestens 85 Gew.-% und besonders bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure [= Poly (1,4-cyclohexandimethylenterephthalat, PCDT) sowie aus Ethylenglykol, Naphthalin-2,6-dicarbonsäure und Biphenyl-4,4'dicarbonsäure (= Polyethylen-2,6-naphthalatbibenzoat, PENBB). Besonders bevorzugt sind Polyester, die zu mindestens 90 Mol-%, insbesondere zu mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. anderen Dicarbonsäuren. Bevorzugt besteht die Basisschicht aus PET.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Neben Polyestern kann die Basisschicht B enthalten: Andere thermoplastische Polymere, Additive und Pigmente. Geeignete andere thermoplastische Polymere sind beispielsweise aliphatische und aromatische Polyamide, Polyolefine und cyclische Olefincopolymere (COC). Geeignete Additive und Pigmente sind weiter unten beschrieben.

Die Herstellung der Polyester kann z.B. nach dem bekannten Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für eventuell vorhandene Deckschichten A oder für eventuell vorhandene Zwischenschichten C können prinzipiell die gleichen Polymere verwendet werden, wie sie zuvor für die Basisschicht B beschrieben wurden.

Zur Erzielung der vorgenannten Eigenschaften, insbesondere des gewünschten Weißgrades der Folie, werden in die Basisschicht B, eventuell aber auch statt dessen oder zusätzlich in vorhandene andere Schichten die notwendigen Pigmente eingearbeitet. In Frage kommen z.B. Titandioxid, Calciumcarbonat, Bariumsulfat, Zinksulfid oder Zinkoxid. In bevorzugter Weise wird $TiO_2$ als alleiniges einfärbendes Pigment verwendet. Es wird bevorzugt als Extrusionsmasterbatch (die Titandioxid-Konzentration ist hier deutlich höher als in der biaxial orientierten Folie) dem Originalrohstoff zugegeben. Typische Werte für die $TiO_2$-Konzentration im Extrusionsmasterbatch sind 50 Gew.-% Titandioxid. Das Titandioxid kann sowohl vom Rutil-Typ als auch vom Anatas-Typ sein. Vorzugsweise wird Titandioxid vom Rutil-Typ verwendet. Die Korngröße des Titandioxids liegt in der Regel zwischen 0,05 und 0,5 µm, bevorzugt zwischen 0,1 und 0,3 µm. Die Folie erhält durch die eingearbeiteten Pigmente ein brillantes weißes Aussehen. Um zu dem gewünschten Weißgrad (>60) und zu der gewünschten niedrigen Transparenz (<60 %) zu gelangen, sollte die Basisschicht hochgefüllt sein. Die Partikelkonzentration zur Erzielung der gewünschten niedrigen Transparenz liegt bei über 3 Gew.-%, jedoch unterhalb von 20 Gew.-%, vorzugsweise über 4 Gew.-%, jedoch unterhalb 18 Gew.-% und ganz besonders bevorzugt oberhalb 5 Gew.-%, jedoch unterhalb 16 Gew.-%, bezogen auf das Gesamtgewicht der sie enthaltenden Schicht.

Zu einer weiteren Steigerung des Weißgrades können geeignete optische Aufheller der Basisschicht und/ oder den anderen Schichten zugesetzt werden. Geeignete optische Aufheller sind beispielsweise Hostalux® KS oder Eastobrite® OB-1.

Die Basisschicht als auch vorhandene weitere Schichten können zusätzlich übliche Additive wie z. B. Stabilisatoren enthalten. Sie werden üblicher Weise dem Polymer oder der Polymermischung vor dem Aufschmelzen zugesetzt. Als Stabilisatoren werden beispielsweise Phosphorverbindungen wie Phosphorsäure oder Phosphorsäureester eingesetzt.

Die Dicke der Polyesterfolie nach der vorliegenden Erfindung kann innerhalb weiter Grenzen variieren. Sie beträgt bevorzugt 10 bis 120 µm, insbesondere 15 bis 105 µm, vorzugsweise 20 bis 80 µm, wobei die Basisschicht einen Anteil von bevorzugt 50 bis 100 % an der Gesamtdicke hat.

Erfindungsgemäß ist mindestens eine Seite (Oberfläche) der Folie mit einer wässrigen Dispersion beschichtet. Die Beschichtung auf der fertigen Folie weist eine Dicke von ca. 5 bis 1000 nm, bevorzugt 10 bis 500 nm, insbesondere 20 bis 200 nm auf. Die Beschichtung wird bevorzugt In-line aufgebracht, d.h. während des Folienherstellprozesses, zweckmäßigerweise vor der Querstreckung. Besonders bevorzugt ist die Aufbringung der Beschichtung mittels des sog. "Reverse gravure-roll coating"-Verfahrens, bei dem sich die Beschichtungen äußerst homogen in Schichtdikken bis 200 nm auftragen lassen. Ebenfalls bevorzugt ist die Aufbringung der Beschichtung durch das Meyer-Rod-Verfahren, mit dem sich größere Beschichtungsstärken erzielen lassen. Die Beschichtung wird bevorzugt als Lösung, Suspension oder Dispersion aufgetragen, besonders bevorzugt als wässrige Lösung, Suspension oder Dispersion. Die genannte Beschichtung verleiht der Folienoberfläche bzw. der Folie die gewünschten Funktionen (niedriger Reibkoeffizient, gute Verarbeitbarkeit, gute Rollenaufmachung, geringe statische Aufladung, bessere Bedruck- und Verklebbarkeit) und mögliche weitere Funktionen. Beispielsweise kann die Folie dadurch mit verbesserter Aromabarriere ausgerüstet sein oder die Haftung zu Materialien ermöglichen, die ansonsten nicht auf der Folienoberfläche haften würden (z.B. photographische Emulsionen).

Die genannten Stoffe/Zusammensetzungen werden als verdünnte Lösung, Emulsion oder Dispersion vorzugsweise als wässrige Lösung, Emulsion oder Dispersion auf eine oder beide Folienoberflächen aufgebracht und anschließend das Lösungsmittel/das Dispersionsmittel verflüchtigt. Wird die Beschichtung In-line vor der Querstreckung aufgebracht, reicht gewöhnlich die Temperaturbehandlung in der Querstreckung und die anschließende Hitzefixierung aus, um das Lösungsmittel/das Dispersionsmittel zu verflüchtigen und die Beschichtung zu trocknen.

Als Feststoffbestandteil enthält die wässrige Dispersion Acrylcopolymere. Die bevorzugt verwendeten Copolymere bestehen im Wesentlichen zu mindestens 50 Gew.-% aus einem oder mehreren polymerisierten acrylischen und/oder methacrylischen Monomeren und zu ca. 1 bis 15 Gew.-% aus copolymerisierbaren Comonomeren, die in copolymerisiertem Zustand unter Einwirkung von erhöhter Temperatur, gegebenenfalls unter Zusatz eines gesonderten harzförmigen Venetzungsmittels, zur Ausbildung von intermolekularen Vernetzungen befähigt sind. Die Acrylcopolymere können grundsätzlich auch weitere Monomereinheiten enthalten.

Die acrylische Komponente der Copolymere ist vorzugsweise in einer Menge von 50 bis 99 Gew.-% anwesend und besteht bevorzugt aus einem Ester der Methacrylsäure, insbesondere einem Alkylester, dessen Alkylgruppe bis zu zehn C-Atome enthält, wie z.B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat ($C_1$ bis $C_4$) abgeleitet sind, insbesondere Ethylacrylat, ergeben zusammen mit einem niederen Alkylmethacrylat eine besonders gute Haftung zwischen der Polyesterfolie und darauf aufgebrachten reprografischen Beschichtungen und Mattbeschichtungen. Ganz besonders bevorzugt werden Haftvermittlercopolymere aus einem Alkylacrylat, z.B. Ethylacrylat oder Butylacrylat, zusammen mit einem Alkylmethacrylat, z.B. Methylmethacrylat, insbesondere zu gleichen molaren Anteilen und in einer Gesamtmenge von ca. 70 bis 95 Gew.-%, eingesetzt. Das Acrylatcomonomere solcher Acryl-/Methacryl-Kombinationen ist vorzugsweise in einem Anteil von 15 bis 65 Mol-% anwesend und das Methacrylat-Comonomere vorzugsweise in einem Anteil, der im Allgemeinen um 5 bis 30 Mol-% größer ist als der Anteil des Acrylatcomonomeren.

Das Methacrylat ist vorzugsweise in einem Anteil von 35 bis 85 Mol-% in der Kombination enthalten.

Erfindungsgemäß geeignete Comonomere, die auch zur Erhöhung der Lösungsmittelbeständigkeit und intermolekularen Vernetzung der Beschichtung eingesetzt werden, sind z.B. N-Methylolacrylamid, N-Methylolmethacrylamid und die entsprechenden Ether; Epoxidmaterialien wie z.B. Glycidylacrylat, Glycidylmethacrylat und Allylglycidylether; Carboxylgruppen enthaltende Monomere wie z.B. Crotonsäure, Itaconsäure oder Acrylsäure; Anhydride wie z. B. Maleinsäureanhydrid; Hydroxylgruppen enthaltende Monomere wie z.B. Itaconsäureanhydrid; Hydroxylgruppen enthaltende Monomere wie z.B. Allylalkohol und Hydroxyethyl- oder Hydroxypropylacrylat oder -methacrylat; Amide wie z.B. Acrylamid, Methacrylamid oder Maleinsäureamid und Isocyanate wie z.B. Vinylisocyanat oder Allylisocyanat. Von den oben genannten vernetzenden Comonomeren werden N-Methylolacrylamid und N-Methylolmethacrylamid bevorzugt, und zwar in erster Linie deswegen, weil Copolymerenketten, die eines dieser Monomerer enthalten, unter der Einwirkung von erhöhten Temperaturen zur Kondensation miteinander und somit zur Ausbildung der gewünschten intermolekularen Vernetzungen befähigt sind. Die gegebenenfalls gewünschte Lösungsmittelbeständigkeit der bevorzugten Acrylatbeschichtung kann aber auch durch die Anwesenheit eines fremden Vernetzungsmittels wie z.B. eines Melamin- oder Harnstoff-Formaldehyd-Kondensationsproduktes erzielt werden. Wird keine Lösungsmittelbeständigkeit benötigt, so kann auf Vernetzungsmittel verzichtet werden.

Die oben beschriebene erfindungsgemäße Beschichtung ist ausführlich in der EP-A-0 144 948 dargestellt, auf die an dieser Stelle ausdrücklich Bezug genommen wird (vgl. insbesondere Seite 5 bis Seite 17). Diese Schrift gibt auch Auskunft über weitere spezifische Kombinationen solcher gemischten Acrylcopolymeren, auf deren Wiedergabe hier verzichtet wird, die aber von der Erfindung ausdrücklich mitumfasst sind.

Diese Beschichtung kann ein- oder beidseitig auf die Folie (Oberfläche) aufgebracht werden. Es ist aber auch möglich, nur eine Seite der Folie mit der erfindungsgemäßen Beschichtung zu versehen und auf die Gegenseite eine andere Beschichtung aufzubringen. Die Beschichtungsrezeptur kann bekannte Zusätze enthalten wie z.B. Antistatika, Netzmittel, Tenside, pH-Regulatoren, Antioxidantien, Farbstoffe, Pigmente, Anti-Blockmittel wie z.B. kolloidales $SiO_2$ usw. Normalerweise ist es angebracht, ein Tensid einzuarbeiten, um die Fähigkeit der wässrigen Beschichtung zur Benetzung der Trägerfolie aus Polyester zu erhöhen.

Ein besonderer Vorteil der Erfindung besteht darin, dass die Herstellungskosten der erfindungsgemäßen Folie nur unwesentlich über denen einer Folie aus Standardpolyesterrohstoffen liegen. Die verarbeitungs- und gebrauchsrelevanten Eigenschaften der erfindungsgemäßen Folie sind gegenüber Folien nach dem Stand der Technik deutlich verbessert.

Daneben ist bei der Herstellung der Folie gewährleistet, dass das Regenerat in einem Anteil von bis zu ca. 60 Gew.-%, bevorzugt 10 bis 50 Gew.-%, jeweils bezogen auf das Gesamtgewicht der Folie, wiederverwendet werden kann, ohne dass dabei die physikalischen Eigenschaften der Folie nennenswert negativ beeinflusst werden.

Gegenstand der vorliegenden Erfindung ist auch ein Verfahren zur Herstellung der erfindungsmäßen Folien. Es umfasst

- das Herstellen einer ein- oder mehrschichtigen Folie aus einer Basisschicht B und gegebenenfalls Deckschicht(en) A (und C) durch Koextrusion und Ausformen der Schmelzen zu flachen Schmelzefilmen,
- Beschichten der Folie mit der acrylisch vernetzenden Schicht (vorzugsweise zwischen dem ersten und dem zweiten Streckschritt),
- biaxiales Strecken der Folie und Thermofixieren der gestreckten Folie.

Zunächst wird das Polymere bzw. die Polymermischung der einzelnen Schichten in einem Extruder komprimiert und verflüssigt. Die Schmelze(n) wird (werden gleichzeitig) durch eine Breitschlitzdüse gepresst, und die ausgepresste (mehrschichtige) Folie wird auf einer oder mehreren Abzugswalzen abgezogen, wobei sie abkühlt und sich verfestigt.

Die biaxiale Verstreckung wird im Allgemeinen sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Die Längsstreckung wird bei ca. 80 bis 140 °C und die Querstreckung bei ca. 80 bis 150 °C durchgeführt. Das Längsstreckverhältnis $\lambda_{MD}$ liegt bevorzugt im Bereich von 2,0:1 bis 5:1, insbesondere bei 2,5:1 bis 4,0:1. Das Querstreckverhältnis $\lambda_{TD}$ liegt allgemein im Bereich von 2,5:1 bis 5,0:1, bevorzugt von 3,0:1 bis 4,5:1. Bevorzugt vor der Querstreckung werden eine oder beide Oberflächen der Folie nach den bekannten Verfahren mit dem zuvor beschriebenem Acrylat beschichtet.

Für die Herstellung einer Folie mit sehr gutem Abzieh- und Delaminierungsverhalten (die Folie darf beim Abziehen nicht Delaminieren) hat es sich als günstig erwiesen, wenn der R-Wert der Folie kleiner als 43 daN/mm$^2$ und das $e_{max}$-Verhältnis kleiner als 2,5 ist. In diesem Fall ist die Festigkeit der Folie in Dickenrichtung so groß, dass beim Abziehen des Deckels vom Becher die Folie definitiv nicht delaminiert, bzw. nicht einreißt oder weiterreißt.

Die wesentlichen Einflussgrößen auf den R-Wert und das $e_{max}$-Verhältnis der Folie sind die Verfahrensparameter in der Längsstreckung und in der Querstreckung sowie der SV-Wert der verwendeten Rohstoffe. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$) und die Folienbahngeschwindigkeit.

Erhält man beispielsweise auf einer Folienanlage R-Werte und $e_{max}$-Verhältnisse, die oberhalb der erfindungsgemäßen Werte liegen, so können erfindungsgemäße Folien hergestellt werden, indem man in der Längsstreckung und in der Querstreckung die Temperaturen erhöht und/oder in der Längsstreckung und in der Querstreckung die Streckverhältnisse erniedrigt. Übliche Werte für die genannten Parameter bei Folien, die nicht für Joghurtbecher-Deckel verwendet werden, sind z.B.

|  | Längsstreckung | Querstreckung |
|---|---|---|
| Strecktemperaturen | 80 bis 118 °C | 90 bis 120 °C |
| Streckverhältnisse | 4,2 bis 4,8 | 4,1 bis 4,4 |

Bei den erfindungsgemäßen Folien liegen die Temperaturen und Streckverhältnisse dagegen besonders bevorzugt innerhalb von Bereichen, wie sie die unten stehende Tabelle wiedergibt.

|  | Längsstreckung | Querstreckung |
|---|---|---|
| Strecktemperaturen | 80 bis 130 °C | 80 bis 135 °C |
| Streckverhältnisse | 2,5 bis 4,0 | 3,5 bis 4,0 |

Ein weiteres Absenken der Streckverhältnisse ist nicht vorteilhaft, da sich ansonsten in der Folie Defekte zeigen können, die unerwünscht sind. Wird beispielsweise das Längsstreckverhältnis unterhalb einem Wert von 2,5 abgesenkt, so erhält man in der Folie unter Umständen Querschläge, die man deutlich sieht.

Erhält man beispielsweise mit einer Maschine bei der Folienherstellung einen R-Wert von 50daN/mm$^2$ mit dem Parametersatz $\lambda_{MD}$ = 4,8 und $\lambda_{TD}$ = 4,0, den Strecktemperaturen in Längs- und in Querrichtung $T_{MD}$ = 80 - 115 °C und $T_{TD}$ = 80 - 125 °C, so erhält man durch Erhöhung der Längsstrecktemperatur auf $T_{MD}$ = 80 - 125 °C oder durch Erhöhung der Querstrecktemperatur auf $T_{TD}$ = 80 - 135 °C oder durch Absenkung des Längsstreckverhältnisses auf $\lambda_{MD}$ = 4,0 oder durch Absenkung des Querstreckverhältnisses auf $\lambda_{TD}$ = 3,6 einen R-Wert von 38. Dabei hat sich überraschender Weise herausgestellt, dass durch diese Maßnahmen auch das $e_{max}$-Verhältnis in den erfindungsgemäßen Bereich gelangt. Die Bahngeschwindigkeit betrug hierbei 140 m/min und der SV-Wert der Folie 730. Die Temperaturen beziehen sich bei der Längsstreckung auf die Walzentemperaturen und bei der Querstreckung auf die Folientemperatur, die mittels IR (infrarot) gemessen wurden.

Bei der nachfolgenden Thermofixierung wird die Folie etwa 0,1 bis 10 s lang bei einer Temperatur von ca. 150 bis 250 °C gehalten. Anschließend wird die Folie in üblicher Weise aufgewickelt.

Als generelle Anweisung zur Erreichung des erfindungsgemäßen R-Wertes und des erfindungsgemäßen $e_{max}$-Verhaltnisses kann zweckmäßiger Weise so verfahren werden, dass man - ausgehend von einem Parametersatz, bei dem die Folie mit nicht erfindungsgemäßen R-Werten und $e_{max}$-Verhältnissen erhalten wird - entweder:

- die Strecktemperatur in MD-Richtung um $\Delta T$ = 3 bis 15 K erhöht, bevorzugt um $\Delta T$ = 5 bis 12 K erhöht und besonders bevorzugt um $\Delta T$ = 7 bis 10 K erhöht, oder
- das Streckverhältnis in MD-Richtung um $\Delta\lambda$ = 0,3 bis 0,8 erniedrigt, bevorzugt um $\Delta\lambda$ = 0,35 bis 0,7 erniedrigt und besonders bevorzugt um $\Delta\lambda$ = 0,4 bis 0,6 erniedrigt, oder
- die Strecktemperatur in TD-Richtung um $\Delta T$ = 4 bis 15 K erhöht, bevorzugt um $\Delta T$ = 5 bis 12 K erhöht und besonders bevorzugt um $\Delta T$ = 7 bis 10 K erhöht, oder
- das Streckverhältnis in TD-Richtung um $\Delta\lambda$ = 0,3 bis 0,8 erniedrigt, bevorzugt um $\Delta\lambda$ = 0,35 bis 0,7 erniedrigt und besonders bevorzugt um $\Delta\lambda$ = 0,4 bis 0,6 erniedrigt.

Sofern zweckmäßig, können auch eine oder mehrere der obigen Maßnahmen miteinander kombiniert werden. Als besonders günstig hat es sich dabei erwiesen, die beiden ersten Maßnahmen miteinander zu kombinieren.

Bevorzugt werden nach der biaxialen Streckung eine oder beide Oberflächen der Folie nach einer der bekannten Methoden zusätzlich corona- oder flammbehandelt. Die Behandlungsintensität liegt im Allgemeinen über 50 mN/m.

Die erfindungsgemäße Folie zeigt ein sehr gutes Handling, sehr gute Wickeleigenschaften und ein sehr gutes Verarbeitungsverhalten. Sie zeichnet sich weiterhin durch ein hervorragendes Abziehverhalten vom Becher aus. Insbesondere ist bei der Folie die Tendenz zum Ein- und Weiterreißen und zum Delaminieren äußerst gering. Die erfindungsgemäße Folie eignet sich daher als Verpackungsmaterial für Nahrungs- und Genussmittel, insbesondere als Deckelfolie für Lebensmittelbehältnisse wie z. B. Joghurtbecher.

Die Folie nach der vorliegenden Erfindung weist daneben hervorragende optische Eigenschaften auf, zeigt hervorragende Weiterverarbeitungseigenschaften und eine ausgezeichnete Rollenaufmachung. Die Folie eignet sich auf Grund ihres sehr guten Handlings und ihrer sehr guten Verarbeitungseigenschaften insbesondere für die Verarbeitung auf schnelllaufenden Maschinen. Außerdem besticht die Folie durch einen hervorragenden Weißgrad, der der Folie zusätzlich ein sehr attraktives, werbewirksames Aussehen verleiht.

Bei der Herstellung der Folie ist gewährleistet, dass das Regenerat, das z. B. als Verschnitt bei der Folienherstellung anfällt, in einer Konzentration von ca. 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Die nachstehende Tabelle (Tabelle 1) fasst die wichtigsten erfindungsgemäßen Folieneigenschaften noch einmal zusammen.

**Tabelle 1**

| | Erfindungs-gemäßer Bereich | bevorzugt | besonders bevorzugt | Einheit | Messmethode |
|---|---|---|---|---|---|
| R-Wert | <43 | <42 | <40 | daN/mm² | wie beschrieben |
| $e_{max}$-Verhältnis | <2,5 | <2,2 | <2,0 | - | wie beschrieben |
| Transparenz | <60 | <55 | <50 | % | wie beschrieben |
| Weißgrad | >60 | >65 | >70 | % | wie beschrieben |
| Dicke | 10-120 | 15-105 | 20-80 | µm | |
| Reibung der beschichteten Seite gegen sich selbst (COF) | <0,45 | <0,42 | <0,40 | - | wie beschrieben |
| Mittlere Rauhigkeit der beschichteten Seite | <50 | <45 | <40 | nm | DIN 4768, Cut-off von 0,25 mm |
| Glanz (20° Messwinkel) | >50 | >55 | >60 | - | wie beschrieben |
| Gelbzahl | <50 | <45 | <40 | - | wie beschrieben |
| Füllstoffkonzentration der Basisschicht (Weißpigment) | >3 | >4 | >5 | Gew.-% | |

Zur Charakterisierung der Rohstoffe und der Folien wurden die folgenden Messmethoden benutzt:

DIN = Deutsches Institut für Normung
ASTM = American Society for Testing and Materials

### Transparenz

Die Transparenz wird in Anlehnung an ASTM-D 1033-77 gemessen.

### Gelbzahl

Die Gelbzahl der Folie wird nach ASTM D 1925-70 mittels eines Spektralphotometers Typ "Lamda 12" der Firma Perkin Elmer (USA), Normlichtart D65, 10° Normalbeobachter bestimmt. Aus den gemessenen Normfarbwerten X, Y, Z erfolgt die Berechnung der Gelbzahl YI gemäß der Gleichung

$$YI = [100 \cdot (1{,}28 \cdot X - 1{,}06 \cdot Z)]/Y$$

### Weißgrad

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers "ELREPHO" der Firma Zeiss, Oberkochem (DE), Normlichtart C, 2° Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weissstandard wird ein Pressling aus Bariumsulfat (DIN 5033, Teil 9) verwendet. Eine ausführliche Beschreibung ist z. B. in Hansl Loos, "Farbmessung", Verlag Beruf und Schule, Itzehoe (1989) beschrieben.

### SV-Wert (Standard Viskosität)

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV = [\eta] = 6{,}907 \cdot 10^{-4} \; SV \, (DCE) + 0{,}063096 \; [dl/g]$$

### Reibung

Die Reibung wurde nach DIN 53 375 bestimmt. Die Gleitreibungszahl wurde 14 Tage nach der Produktion gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

### Bestimmung des R-Wertes

Der R-Wert der Folie wird in der Mitte der Folienbahn gemessen.

Folienstreifen links

Folienstreifen rechts

**MD**

Wie die schematische Darstellung zeigt werden dazu 2 Folienstreifen von 15 mm Breite und 200 mm Länge (rechts und links) jeweils unter 45° zur MD-Richtung aus der Bahnmitte der Folie herausgeschnitten und in ein Zug-Dehnungsmessgerät (Fa. Zwick, Typ 010, Ulm, DE) eingespannt und gedehnt. Der R-Wert wird unter Zugrundelegung folgender Gleichung berechnet:

$$\text{R-Wert: } = 1/3 \times (\sigma_{30\%} - \sigma_{0,2\%}) \text{ [gemessen in daN/mm}^2\text{]}$$

In dieser Gleichung haben die Messgrößen $\sigma_{30\%}$ und $\sigma_{0,2\%}$ die folgende Bedeutung:

- $\sigma_{30\%}$ = Zugspannung in der Folie bei 30 % Dehnung, gemessen unter 45° zur MD-Richtung, einmal zur linken und einmal zur rechten Seite der MD-Richtung.
- $\sigma_{0,2\%}$ = Zugspannung in der Folie bei 0,2 % Dehnung, gemessen unter 45° zur MD-Richtung, einmal zur linken und einmal zur rechten Seite der MD-Richtung.

Bei der erfindungsgemäßen Folie ist der R-Wert der Folie kleiner als:
R-Wert < 43 daN/mm$^2$, rechts und links.

Bestimmung des $e_{max}$-Verhältnisses

Das $e_{max}$-Verhältnis wird über die gesamte Breite der Folienbahn (über die Breite der Maschinenrolle) ge-messen. Das $e_{max}$-Verhältnis wird unter einem Winkel von 45° zur MD-Richtung, und zwar einmal rechts zur MD-Richtung und das andere Mal links zur MD-Richtung gemessen. In der Folienbahnmitte ist das $e_{max}$-Verhältnis nahezu eins und vergrößert sich umso mehr, je weiter man von der Folienbahnmitte zu den Folienrändern gelangt. Der Abstand zwischen zwei Messpunkten (in TD-Richtung, = Breitenrichtung der Folienbahn) beträgt dabei üblicher Weise 50 cm. Wie bei der Bestimmung des R-Wertes werden auch hier 2 Folienstreifen von 15 mm Breite und 200 mm Länge (rechts und links) jeweils unter 45° zur MD-Richtung aus der Folienbahn herausgeschnitten. Die Muster werden dann im Zug-Dehnungsmessgerät (siehe oben) gedehnt. Das $e_{max}$-Verhältnis wird unter Zugrundelegung der folgenden Gleichung berechnet:

$$e_{max}\text{-Verhältnis: } = \varepsilon_{links}/\varepsilon_{rechts} \text{ oder } \varepsilon_{rechts}/\varepsilon_{links} \text{ (welches definitionsgemäß immer >1 ist)}$$

$\varepsilon_{links}$ ist die Reißdehnung der Folie unter 45° zur MD-Richtung, links
$\varepsilon_{rechts}$ ist die Reißdehnung der Folie unter 45° zur MD-Richtung, rechts.
Von der Definition her ist das $e_{max}$-Verhältnis immer größer als 1. Bei der Messung über die Folienbahnbreite folgt daraus, dass ungefähr für die erste Hälfte der Bahn die erste Relation ($\varepsilon_{links}/\varepsilon_{rechts}$ gilt und für die zweite Hälfte der Bahn die zweite Relation gilt ($\varepsilon_{rechts}/\varepsilon_{inks}$. Bei der erfindungsgemäßen Folie ist das $e_{max}$-Verhältnis der Folie kleiner als:

$$e_{max}\text{-Verhältnis < 2,5, rechts und links.}$$

Beurteilung des Abziehverhaltens der Folie von einem Joghurtbecher

Die Beurteilung des Abziehverhaltens der Folie vom Becher erfolgt visuell. Bei diesem Prüfverfahren wird die Folie (der Deckel) mittels eines Laborbeschichtungsgerätes der Fa. RK Print-Coat Instruments (Royston, UK) mit Siegellack des Typs HS-61-095 (Fa. Novacote, Hamburg, DE) beschichtet. Das verwendete Rakel erzeugte einen Nassantrag mit einer Dicke von 24 µm. Anschließend wurde die beschichtete Folie 24 h bei 25 °C getrocknet. Dann wurde die Folie auf einen Polystyrol-Becher (Innendurchmesser: 6,5 cm, Außendurchmesser inklusive Siegelrand: 7,3 cm) gesiegelt (Siegelgerät Typ PA 210 von Packaging Automation Ltd., Knutsford, UK; Siegelbedingungen: 150 °C, 1 s). Nach einer Lagerzeit (Aushärtezeit) von 48 h wird die Folie mit der Hand vom Becher abgezogen. Das Abziehverhalten wird mit

++ (= gut) bewertet, wenn bei 10 Versuchen die Folie in keinem Fall einreißt und/oder delaminiert;
-- (= schlecht) bewertet, wenn bei 10 Versuchen die Folie dabei mindestens einmal einreißt und/oder delaminiert.

**Beispiel 1**

Die erfindungsgemäße Beschichtung besteht aus einer wässrigen Dispersion, die 4,5 Gew.-% eines Latex sowie 0,2 Gew.-% Natriumlaurylsulfat und 9,8 Gew.-% Triton X-405 (Fa. Fluka, Buchs, CH) enthält. Das Latex ist ein Copolymeres aus 60 Gew.-% Methylmethacrylat, 35 Gew.-% Ethylacrylat und 5 Gew.-% N-Methylolacrylamid.

Es wurden Chips aus Polyethylenterephthalat bei 160 °C auf eine Restfeuchte von weniger als 50 ppm getrocknet und dem Extruder für die Basisschicht B zugeführt.

Durch Extrusion und anschließende stufenweise Orientierung in Längsrichtung wurde eine uniaxial orientierte Folie erhalten, die Corona behandelt und mittels des "Reverse gravure-roll coating"-Verfahrens mit der zuvor beschriebenen Dispersion beschichtet wurde. Das Trockengewicht der Beschichtung betrug ca. 0,035 g/m$^2$ (bezogen auf die biaxial gestreckte Folie) entsprechend einer Schichtdicke von 25 nm. Die so längsgestreckte Folie wurde in Querrichtung zu einer weißen einschichtigen Folie mit einer Gesamtdicke von 55 µm verstreckt.

Basisschicht B:

85 Gew.-% Polyethylenterephthalat mit einem SV-Wert von 800

15 Gew.-% Masterbatch der Fa. Sukano (Schindellegi, CH) mit 50 Gew.-% Titandioxid (mittlerer Teilchendurchmesser Titandioxid ca. 0,3 µm).

Die Herstellungsbedingungen in den einzelnen Verfahrensschritten waren:

| Längsstreckung | Temperatur | 80 - 125 °C |
| | Längsstreckverhältnis | 3,4 |
| Querstreckung | Temperatur | 80 - 135 °C |
| | Querstreckverhältnis | 4,0 |
| Fixierung | Temperatur | 230 °C |
| Dauer | | 3 s |

Es wurde eine einschichtige Folie mit sehr guter Optik, einem niedrigen Reibungskoeffizienten, einem sehr guten Verarbeitungsverhalten und einer sehr guten Wickelqualität erhalten. Die Folie zeigte das gewünschte Verhalten beim Abziehen der Folie vom Becher. Die Folie reißt dabei nicht ein und zeigt keine Tendenz zum Delaminieren (Tabelle 2).

**Beispiel 2**

Beispiel 1 wurde wiederholt, wobei die Verfahrensparameter jedoch geändert wurden:

| Längsstreckung | Temperatur | 80 - 125 °C |
| | Längsstreckverhältnis | 4,0 |

(fortgesetzt)

| Querstreckung | Temperatur | 80 - 135 °C |
|---|---|---|
| | Querstreckverhältnis | 3,4 |
| Fixierung | Temperatur | 230 °C |
| Dauer | | 3 s |

Auch unter diesen Bedingungen wurde eine Folie mit sehr guter Optik, einem niedrigen Reibungskoeffizienten, einem sehr guten Verarbeitungsverhalten und einer sehr guten Wickelqualität erhalten. Die Folie zeigte ebenfalls das gewünschte Verhalten beim Abziehen der Folie vom Becher. Die Folie reißt dabei nicht ein und zeigt keine Tendenz zum Delaminieren.

**Beispiel 3**

Beispiel 1 wurde wiederholt, jedoch die Dicke der Folie von 55 µm auf 36 µm reduziert. Auch diese vergleichsweise dünne Folie zeichnet sich durch ein gutes Verarbeitungsverhalten, eine sehr gute Wickelqualität und das gewünschte Abziehverhalten der Folie vom Becher aus.

**Vergleichsbeispiel 1 (VB1)**

Im Vergleich zu Beispiel 1 wurden jetzt die Verfahrensbedingungen geändert:

| Längsstreckung | Temperatur | 80 - 118 °C |
|---|---|---|
| | Längsstreckverhältnis | 4,0 |
| Querstreckung | Temperatur | 80 - 125 °C |
| | Querstreckverhältnis | 4,0 |
| Fixierung | Temperatur | 230 °C |
| Dauer | | 3 s |

Die Folie zeigte nicht das gewünschte Verarbeitungsverhalten und insbesondere nicht das gewünschte Verhalten beim Abziehen der Folie vom Becher. Die Folie reißt ein und zeigte eine hohe Tendenz zum Delaminieren.

**Vergleichsbeispiel 2 (VB2)**

Im Vergleich zu Beispiel 1 wurden jetzt die Folie nicht acrylisch beschichtet. Die Folie zeigte nicht das gewünschte Verarbeitungsverhalten, sie neigte zum Verblocken und hatte nicht die geforderte hohe Wickelqualität.
Die Ergebnisse der Beispiele / Vergleichsbeispiele sind in Tabelle 2 zusammengefasst.

## Tabelle 2

| Beispiele | Dicke der Folie µm | Folien-bahn-breite m | R-Wert daN/mm² | $e_{max}$-Verhältnis | Reibung der beschichteten Seite gegen sich selbst | Rauigkeit der be-schichte-ten Seite nm | Trans-parenz % | Weiß-grad % | Glanz 20° | Gelbzahl | Verarbei-tungsver-halten | Abzieh-verhalten der Folie |
|---|---|---|---|---|---|---|---|---|---|---|---|---|
| Beispiel 1 | 55 | 5 | 39 | 1,8 | 0,36 | 28 | 28 | 90 | 72 | 36 | ++ | ++ |
| Beispiel 2 | 55 | 5 | 37 | 1,7 | 0,35 | 30 | 29 | 90 | 71 | 34 | ++ | ++ |
| Beispiel 3 | 36 | 5 | 38 | 1,8 | 0,35 | 31 | 35 | 88 | 70 | 30 | ++ | ++ |
| VB 1 | 55 | 5 | 50 | 2,7 | 0,36 | 30 | 28 | 90 | 72 | 36 | + | -- |
| VB 2 | 55 | 5 | 39 | 1,7 | 0,48 | 32 | 28 | 90 | 72 | 36 | -- | ++ |

Verarbeitungsverhalten

++ sehr gut      + gut

-- schlecht      - mäßig

**Patentansprüche**

1. Weiße, biaxial orientierte Polyesterfolie, die eine Basisschicht B aufweist, die einen thermoplastischen Polyester enthält, **dadurch gekennzeichnet, dass** der R-Wert der Folie kleiner als 43 daN/mm$^2$, das $e_{max}$-Verhältnis der Folie kleiner als 2,5 und zumindest eine der beiden Folienoberflächen mit einer acrylathaltigen Beschichtung versehen ist.

2. Polyesterfolie nach Anspruch 1, **dadurch gekennzeichnet, dass** der R-Wert der Folie kleiner als 42 daN/mm$^2$, insbesondere kleiner als 40 daN/mm$^2$, und das $e_{max}$-Verhältnis der Folie kleiner als 2,2, insbesondere kleiner als 2,0, ist.

3. Polyesterfolie nach Anspruch 1 oder 2, **dadurch gekennzeichnet, dass** die Basisschicht B den thermoplastischen Polyester mindestens zu 80 Gew.-% enthält, bezogen auf das Gesamtgewicht der Schicht.

4. Polyesterfolie nach einem oder mehreren der Ansprüche 1 bis 3, **dadurch gekennzeichnet, dass** der Polyester Einheiten aus Ethylenglykol und Terephthalsäure und/oder Einheiten aus Ethylenglykol und Naphthalin-2,6-dicarbonsäure enthält.

5. Polyesterfolie nach einem oder mehreren der Ansprüche 1 bis 4, **dadurch gekennzeichnet, dass** als Polyester der Basisschicht B Polyethylenterephthalat verwendet wird.

6. Polyesterfolie nach einem oder mehreren der Ansprüche 1 bis 5, **dadurch gekennzeichnet, dass** es sich um eine einschichtige Folie handelt.

7. Polyesterfolie nach einem oder mehreren der Ansprüche 1 bis 6, **dadurch gekennzeichnet, dass** die Folie einen symmetrischen Schichtaufbau ABA oder ACBCA aufweist, wobei C die Zwischenschichten und A die Deckschichten der Folie darstellen.

8. Polyesterfolie nach einem oder mehreren der Ansprüche 1 bis 7, **dadurch gekennzeichnet, dass** die Folie im wesentlichen nur TiO$_2$ als Weißpigment oder Füllstoff enthält.

9. Polyesterfolie nach einem oder mehreren der Ansprüche 1 bis 8, **dadurch gekennzeichnet, dass** nur die Basisschicht B der Folie mit einem Weißpigment oder Füllstoff ausgestattet ist.

10. Polyesterfolie nach einem oder mehreren der Ansprüche 1 bis 9, **dadurch gekennzeichnet, dass** die Folie das Weißpigment zu mehr als 3 Gew.-%, bevorzugt zu mehr als 4 Gew.-% und insbesondere zu mehr als 5 Gew.-% enthält, bezogen auf das Gesamtgewicht der damit ausgerüsteten Schicht.

11. Polyesterfolie nach einem oder mehreren der Ansprüche 1 bis 10, **dadurch gekennzeichnet, dass** die acrylathaltige Beschichtung polymerisierte acrylische und/oder methacrylische Monomere und copolymerisierbare Comonomere, die zur Ausbildung von intermolekularen Vernetzungen befähigt sind, enthält.

12. Polyesterfolie nach einem oder mehreren der Ansprüche 1 bis 11, **dadurch gekennzeichnet, dass** die acrylathaltige Beschichtung als wässrige Dispersion auf eine oder beide Folienoberflächen aufgebracht wird.

13. Polyesterfolie nach einem oder mehreren der Ansprüche 1 bis 12, **dadurch gekennzeichnet, dass** die Gesamtdicke der Folie 10 bis 120 μm, bevorzugt 15 bis 105 μm, insbesondere 20 bis 80 μm, beträgt.

14. Polyesterfolie nach einem oder mehreren der Ansprüche 1 bis 13, **dadurch gekennzeichnet, dass** die Gelbzahl der Folie kleiner als 40 ist.

15. Verfahren zur Herstellung einer Polyesterfolie nach einem oder mehreren der Ansprüche 1 bis 14, umfassend die Schritte

    a) Herstellen einer ein- oder mehrschichtigen Folie durch Extrusion bzw. Koextrusion und Ausformen der Schmelzen zu flachen Schmelzefilmen,
    b) Beschichten der Folie mit einer acrylathaltigen Beschichtung,
    c) biaxiales Strecken der Folie und

d) Thermofixieren der gestreckten Folie

**16.** Verfahren nach Anspruch 15, **dadurch gekennzeichnet, dass** man zur Erzielung des gewünschten R-Wertes oder $e_{max}$-Verhältnisses der Folie die Strecktemperaturen erhöht und/oder das Streckverhältnis (jeweils in Längs- und/oder Querrichtung) erniedrigt.

**17.** Verfahren nach Anspruch 15 oder 16, **dadurch gekennzeichnet, dass** die Strecktemperatur in Längsrichtung 80 bis 130 °C, in Querrichtung 80 bis 135 °C und das Streckverhältnis in Längsrichtung 2,5 bis 4,0 und in Querrichtung 3,5 bis 4,0 betragen.

**18.** Verwendung einer Polyesterfolie nach einem oder mehreren der Ansprüche 1 bis 14 als Verpackungsfolie für Nahrungs- und Genussmittel.

**19.** Verwendung nach Anspruch 18 als Deckelfolie für becherförmige Behältnisse, insbesondere Joghurtbecher.